# FASCICULE DE BREVET EUROPEEN

(11) **EP 3 245 130 B1**
(45) Date de publication et mention de la délivrance du brevet: **07.11.2018**
(21) Numéro de dépôt: 16705559.9
(22) Date de dépôt: 11.01.2016
(51) Int. Cl.: B64C 27/04, B64D 35/08, F02C 3/10, F02C 6/02

(54) **DISPOSITIF ET PROCÉDÉ DE RÉGULATION D'UN MOTEUR AUXILIAIRE ADAPTÉ POUR FOURNIR UNE PUISSANCE PROPULSIVE AU ROTOR D'UN HÉLICOPTÈRE**
VORRICHTUNG UND VERFAHREN ZUR STEUERUNG EINES HILFSMOTORS ZUR SCHUBKRAFTVERSORGUNG AN EINEM ROTOR EINES HUBSCHRAUBERS
DEVICE AND METHOD FOR CONTROLLING AN AUXILIARY ENGINE SUITABLE FOR SUPPLYING THRUST POWER TO THE ROTOR OF A HELICOPTER

(30) Priorité: 12.01.2015 FR 1550209
(43) Date de publication de la demande: 22.11.2017
(73) Titulaire: Safran Helicopter Engines, 64510 Bordes (FR)
(72) Inventeur: MARIN, Jean Philippe, Jacques, 64110 Jurancon (FR); GALLOT, Matthieu, 77550 MOISSY-CRAMAYEL (FR); ETCHEPARE, Philippe, 64000 Pau (FR)
(74) Mandataire: Gevers & Orès
(86) Numéro de dépôt international: PCT/FR2016/050038
(87) Numéro de publication internationale: WO 2016/113489

(56) Documents cités:
- US-A- 4 423 593
- US-A1- 2014 145 028

## Description

### 1. Domaine technique de l'invention

L'invention concerne la régulation des moteurs auxiliaires agencés au sein des architectures des hélicoptères multi-moteurs, et en particulier la régulation des moteurs auxiliaires adaptés pour fournir un surplus de puissance propulsive en complément de la puissance propulsive fournie par les moteurs principaux de l'hélicoptère.

### 2. Arrière-plan technologique

Les hélicoptères sont généralement équipés de moteurs principaux qui servent à la propulsion de l'hélicoptère et d'un ou plusieurs moteurs auxiliaires. Les moteurs auxiliaires sont des petites turbines à gaz (généralement désignés par l'acronyme anglais APU pour *Auxiliary Power Unit*) dont la fonction principale est de fournir de la puissance non propulsive - électrique, mécanique, hydraulique et/ou pneumatique - dans les phases de vol où les moteurs principaux ne sont pas en mesure de le faire (au sol, dans les phases de décollage ou d'atterrissage, dans les phases de recherche, etc.).

Le document US2014/145028-A1 décrit un hélicoptère comprenant deux moteurs de propulsion principaux et un système de régulation principal de ces deux moteurs. Cet hélicoptère comprend également un moteur secondaire de propulsion associé à un second système de régulation, indépendant du système de régulation principal. Ce second système de régulation régule le moteur secondaire selon une consigne constante. De ce fait, la régulation du moteur secondaire ne peut pas être régulée à partir d'une erreur de vitesse de la turbine libre du moteur secondaire, ce qui présente l'inconvénient de nécessiter éventuellement un équilibrage avec les moteurs principaux de l'hélicoptère.

Il a également été proposé par le demandeur, notamment dans la demande de brevet FR 2 992 024, d'utiliser les moteurs auxiliaires, non seulement pour fournir de la puissance non propulsive, mais également pour apporter, dans certaines phases du vol, un surplus de puissance propulsive, en complément de la puissance propulsive des moteurs principaux.

Dans le cadre d'une telle utilisation d'un moteur auxiliaire, à la fois pour la fourniture de puissances propulsive et non propulsive, l'une des difficultés qui se pose maintenant est de pouvoir réguler ce moteur auxiliaire avec un statisme faible et maitrisé, de manière à pouvoir adapter la puissance propulsive délivrée par ce moteur en fonction des conditions de vol de l'hélicoptère. Il se pose notamment le problème de pouvoir réguler le moteur auxiliaire sans impacter le fonctionnement des moteurs principaux.

### 3. Objectifs de l'invention

L'invention vise donc à fournir un dispositif et un procédé de régulation d'un moteur auxiliaire d'un hélicoptère adapté pour fournir de la puissance propulsive en complément des moteurs principaux.

L'invention vise en particulier à fournir un dispositif et un procédé de régulation d'un moteur auxiliaire qui ne nécessite pas d'équilibrage avec les moteurs principaux de l'hélicoptère.

L'invention vise aussi à fournir un dispositif et un procédé de régulation d'un moteur auxiliaire qui n'impacte pas le fonctionnement et les performances des moteurs principaux. En d'autres termes, l'invention vise à fournir un procédé de régulation qui est transparent pour le pilote de l'hélicoptère.

L'invention vise aussi à fournir une architecture d'un hélicoptère comprenant un dispositif de régulation selon l'invention.

### 4. Exposé de l'invention

Pour ce faire, l'invention concerne un dispositif de régulation d'un moteur auxiliaire comprenant un générateur de gaz et une turbine libre adaptée pour pouvoir être reliée mécaniquement au rotor d'un hélicoptère pour lui fournir une puissance propulsive en complément d'une puissance propulsive fournie par des moteurs principaux.

Un dispositif de régulation selon l'invention est caractérisé en ce qu'il comprend un régulateur proportionnel-intégral présentant un gain proportionnel et un gain intégral, fonctions de la vitesse de rotation dudit générateur de gaz dudit moteur auxiliaire de l'hélicoptère, ledit régulateur étant configuré pour recevoir un signal représentatif d'une erreur de vitesse de ladite turbine libre dudit moteur auxiliaire, dit signal d'erreur, et pour générer un signal de correction de la vitesse d'entrainement dudit générateur de gaz dudit moteur auxiliaire, ledit signal de correction étant obtenu par l'addition d'un signal proportionnel audit signal d'erreur suivant ledit gain proportionnel, et d'un signal, dit signal intégré, résultant de l'addition d'un signal proportionnel audit signal d'erreur suivant ledit gain intégral et d'un signal, dit signal mémoire, fournit par une boucle de rétroaction dudit signal intégré, ledit signal mémoire étant dépendant d'une mesure représentative de la vitesse de rotation de ladite turbine libre dudit moteur auxiliaire.

Un dispositif de régulation d'un moteur auxiliaire selon l'invention permet donc de réguler la vitesse de fonctionnement du moteur auxiliaire sans nécessiter un échange de données entre ce moteur auxiliaire et les moteurs principaux de l'hélicoptère. En particulier, un dispositif de régulation selon l'invention permet une régulation de la puissance propulsive fournie par le moteur auxiliaire au rotor de l'hélicoptère sans imposer un équilibrage avec les moteurs principaux. Le dispositif de régulation est autonome et se fonde uniquement sur la vitesse de rotation de la turbine libre et la vitesse de rotation du générateur de gaz du moteur auxiliaire.

En entrée, le dispositif de régulation reçoit un signal d'erreur qui est obtenu par exemple par un soustracteur apte à calculer la différence entre une vitesse de consigne et une mesure de la vitesse de la turbine libre.

Un signal de correction est alors déterminé par l'addition d'un signal proportionnel audit signal d'erreur, et d'un signal, dit signal intégré, ledit signal intégré étant obtenu par l'addition d'un signal proportionnel audit signal d'erreur suivant ledit gain intégral et d'un signal, dit signal mémoire, fournit par une boucle de rétroaction dudit signal intégré, ledit signal mémoire étant dépendant d'une mesure représentative de la vitesse de rotation de ladite turbine libre dudit moteur auxiliaire.

Avantageusement et selon l'invention, ladite boucle de rétroaction comprend :
- un premier circuit configuré pour fournir un signal mémoire qui est une image dudit signal intégré,
- un deuxième circuit configuré pour fournir un signal mémoire proportionnel audit signal intégré suivant un gain, dit gain d'annulation, inférieur à 1,
- un sélecteur configuré pour sélectionner ledit premier circuit ou ledit deuxième circuit en fonction des résultats d'un test sur une mesure représentative de la vitesse de rotation de ladite turbine libre dudit moteur auxiliaire.

Selon cette variante, le signal intégré qui est obtenu par l'addition d'un signal proportionnel audit signal d'erreur et d'un signal mémoire, est obtenu soit par une régulation intégrale classique (premier circuit de la boucle de rétroaction), soit par une régulation intégrale compensée (deuxième circuit de la boucle de rétroaction, aussi désigné dans la suite comme le circuit de compensation) dont la boucle de retour est corrigée d'un gain d'annulation de la mémoire. Le choix entre les deux types de régulation s'effectue suivant un test sur une mesure représentative de la vitesse de rotation de la turbine libre dudit moteur auxiliaire.

En d'autres termes, selon cette variante avantageuse, la régulation intégrale fournit une correction qui est soit une image de l'erreur intégrée de façon classique (premier circuit de la boucle), soit une correction qui tend à s'annuler (circuit de compensation). Dans le premier cas, le dispositif de régulation se comporte alors comme un régulateur proportionnel-intégral classique. Dans le second cas, le signal en sortie d'intégrateur s'annule progressivement lorsque l'erreur d'asservissement de la vitesse de rotation de la turbine libre est faible (car régulée par les moteurs principaux) et le dispositif de régulation permet une régulation du moteur sur le point de fonctionnement cible choisi. En d'autres termes, un dispositif de régulation selon cette variante présente deux modes de fonctionnement dépendant des résultats d'un test sur une mesure représentative de la vitesse de rotation de la turbine libre du moteur auxiliaire.

Avantageusement et selon l'invention, ledit test réalisé par ledit sélecteur consiste à comparer ledit signal d'erreur avec un seuil de statisme prédéterminé de sorte à pouvoir activer ledit premier circuit si l'erreur de vitesse est supérieure audit seuil de statisme prédéterminé et à activer ledit deuxième circuit si l'erreur de vitesse est inférieure audit seuil, de manière à ce que ledit signal intégré s'annule progressivement.

Selon cette variante, si l'erreur de régulation est supérieure au seuil de statisme prédéterminé, le régulateur se comporte comme un régulateur proportionnel-intégral classique. En revanche, si l'erreur de régulation est inférieure au seuil de statisme prédéterminé, le régulateur peut entrainer le moteur auxiliaire à fonctionner sur le point de fonctionnement cible choisi, par exemple au niveau de son anticipation de puissance.

En d'autres termes, pour une phase de vol sans variation rapide de la puissance nécessaire, le dispositif de régulation permet, en annulant progressivement l'intégrateur, de réguler le moteur sur le point de fonctionnement choisi.

Pour une phase de vol nécessitant une variation rapide de puissance, le régulateur retrouve un comportement de régulateur proportionnel-intégral classique.

Selon une autre variante, ledit gain d'annulation de ladite deuxième boucle est fonction de l'erreur de vitesse de ladite turbine libre dudit moteur auxiliaire.

Selon cette variante, le gain d'annulation est une fonction de l'erreur de la vitesse de la turbine libre du moteur auxiliaire, ce qui permet de supprimer le sélecteur à condition de seuil.

Avantageusement, un dispositif de régulation selon l'invention, comprend en outre un additionneur configuré pour additionner ledit signal de correction généré par ledit régulateur proportionnel-intégral et un signal correspondant à un point de fonctionnement cible dudit moteur auxiliaire dépendant desdites conditions de vol de l'hélicoptère, pour fournir un signal de consigne audit générateur de gaz dudit moteur auxiliaire.

L'invention concerne également une architecture d'un hélicoptère multi-moteurs comprenant un groupe de puissance propulsive comprenant des moteurs principaux adaptés pour être reliés à une boite de transmission de puissance entrainant un rotor de l'hélicoptère, et un moteur auxiliaire comprenant un générateur à gaz et une turbine libre, ledit moteur auxiliaire étant adapté pour pouvoir être relié d'une part à un réseau de bord de l'hélicoptère pour pouvoir alimenter au sol ledit réseau de bord en énergie électrique, et d'autre part audit groupe de puissance propulsive pour pouvoir apporter un surplus de puissance propulsive au cours d'un vol de l'hélicoptère.

Une architecture selon l'invention est caractérisée en ce que ladite architecture comprend en outre un dispositif de régulation dudit moteur auxiliaire selon l'invention, de manière à pouvoir adapter au cours d'un vol de l'hélicoptère la puissance propulsive fournie par ledit moteur auxiliaire audit groupe de puissance propulsive, indépendamment de tout équilibrage entre lesdits moteurs principaux et le moteur auxiliaire.

Une architecture selon l'invention permet de disposer d'un moteur auxiliaire qui fournit de la puissance non propulsive, et notamment électrique, au réseau de bord de l'hélicoptère, lorsque l'hélicoptère est au sol, et qui fournit de la puissance propulsive au cours de certaines phases de vol, cette puissance propulsive étant régulée sans nécessiter un équilibrage de puissance avec les moteurs principaux de l'hélicoptère.

Une architecture selon l'invention est donc particulièrement performante et permet d'optimiser l'utilisation d'un moteur auxiliaire sans néanmoins impacter le fonctionnement des autres organes de l'architecture, et notamment les moteurs principaux.

L'invention concerne également un hélicoptère comprenant une architecture selon l'invention.

L'invention concerne également un procédé de régulation d'un moteur auxiliaire adapté pour fournir de la puissance propulsive à un rotor d'hélicoptère, caractérisé en ce qu'il comprend les étapes suivantes :
- réception d'un signal représentatif d'une erreur de vitesse de ladite turbine libre dudit moteur auxiliaire, dit signal d'erreur,
- génération d'un signal de correction de la vitesse d'entrainement dudit générateur de gaz dudit moteur auxiliaire résultant de l'addition d'un signal proportionnel audit signal d'erreur suivant un gain proportionnel, et d'un signal, dit signal intégré, résultant de l'addition d'un signal proportionnel audit signal d'erreur suivant un gain intégral et d'un signal, dit signal mémoire, dépendant d'une mesure représentative de la vitesse de rotation de ladite turbine libre dudit moteur auxiliaire.

Avantageusement et selon l'invention, ledit signal mémoire est un signal obtenu par une sélection entre un signal image dudit signal intégré et un signal proportionnel audit signal intégré suivant un gain, dit gain d'annulation, inférieur à 1, la sélection dépendant des résultats d'un test sur une mesure représentative de la vitesse de rotation de ladite turbine libre dudit moteur auxiliaire.

En d'autres termes, selon cette variante, la régulation intégrale est une régulation obtenue par une sélection entre une régulation intégrale classique et une régulation intégrale, dite de compensation, obtenue en rebouclant l'intégrateur avec un gain inférieur à 1, la sélection dépendant des résultats d'un test sur une mesure représentative de la vitesse de rotation de la turbine libre dudit moteur auxiliaire.

Avantageusement et selon l'invention, ledit test de sélection consiste à comparer ledit signal d'erreur avec un seuil de statisme prédéterminé et à choisir ledit signal image du signal intégré si l'erreur de vitesse, en valeur absolue, est supérieure audit seuil de statisme prédéterminé et à choisir ledit signal proportionnel audit signal intégré suivant ledit gain d'annulation si l'erreur de vitesse, en valeur absolue, est inférieure audit seuil.

En d'autres termes, la régulation intégrale classique est choisie si l'erreur de vitesse est supérieure audit seuil de statisme prédéterminé et la régulation intégrale compensée est choisie si l'erreur de vitesse est inférieure audit seuil.

Le dispositif de régulation selon l'invention met avantageusement en oeuvre le procédé de régulation selon l'invention, et le procédé de régulation selon l'invention est avantageusement mis en oeuvre par un dispositif de régulation selon l'invention.

L'invention concerne également un dispositif de régulation, une architecture, un hélicoptère et un procédé de régulation caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un dispositif de régulation selon un mode de réalisation de l'invention selon un premier mode de fonctionnement,
- la figure 2 est une vue schématique d'un dispositif de régulation selon un mode de réalisation selon un second mode de fonctionnement,
- la figure 3 est une vue schématique d'une architecture d'un hélicoptère selon un mode de réalisation de l'invention,
- la figure 4 est une vue schématique d'un hélicoptère selon un mode de réalisation de l'invention,
- la figure 5 est une vue schématique d'un procédé de régulation selon un mode de réalisation de l'invention.

### 6. Description détaillée d'un mode de réalisation de l'invention

Sur la figure, les échelles et les proportions ne sont pas strictement respectées et ce, à des fins d'illustration et de clarté.

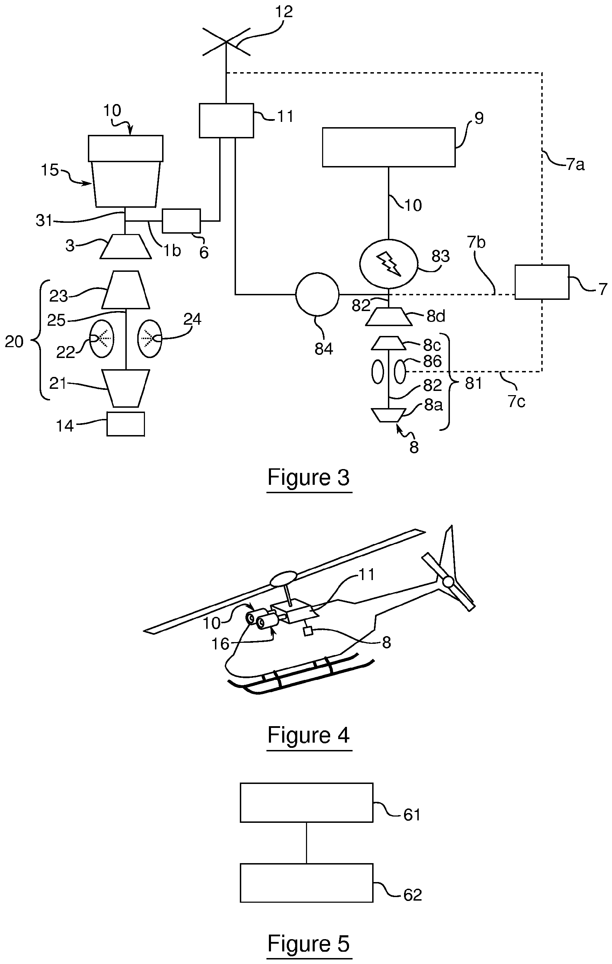

La figure 3 illustre de manière simplifiée une architecture d'un hélicoptère bimoteurs selon un mode de réalisation de l'invention. Sur la figure 3, seul un moteur 10 principal est représenté à des fins de clarté, l'autre moteur étant identique et relié symétriquement à une boite 11 de transmission de puissance, elle-même reliée au rotor 12 de l'hélicoptère. Les moteurs principaux, tel que le moteur principal 10 représenté, comportent un générateur de gaz 20 formé d'un ensemble constitué d'un compresseur 21 couplé à une chambre de combustion 22, elle-même couplée à une turbine 23. Le moteur comporte également une turbine libre 3 entraînant un arbre de transmission de puissance 31. Le générateur de gaz 20 et la turbine libre 3 sont disposés entre une entrée d'air 14 et une tuyère d'échappement des gaz 15.

En fonctionnement, la chambre 22 est alimentée en carburant par des injecteurs 24, dans lesquels de l'air comprimé par le compresseur 21 est également aspiré. La combustion du mélange air/carburant dans la chambre 22 fournit des gaz énergétiques de vélocité élevée. Ces gaz chauds sont détendus d'abord dans la turbine 23 qui entraîne mécaniquement le compresseur 21 via un arbre haute-pression 25 d'entraînement, puis dans la turbine libre 3.

Le moteur principal 10 transmet de la puissance mécanique au rotor 12 de l'hélicoptère et à des équipements ou accessoires via une boîte de réduction de vitesse 6, elle-même reliée à une boite 11 de transmission de puissance.

L'architecture selon l'invention comprend également un moteur auxiliaire 8 qui comporte, comme les moteurs principaux, un générateur de gaz 81 comprenant un compresseur 8a, une chambre de combustion 86 et une turbine 8c. Le moteur auxiliaire comprend également une turbine libre 8d. L'arbre d'entraînement 82 de la turbine libre 8d du moteur auxiliaire 8 est couplé à une génératrice électrique 83 qui transforme l'énergie mécanique transmise par l'arbre 82 en énergie électrique. Le moteur auxiliaire 8 est donc capable de fournir de l'énergie électrique non propulsive à un réseau 9 de bord de l'hélicoptère.

Le moteur auxiliaire est également relié à la boite 11 de transmission de puissance par un mécanisme 84 débrayable commandé de manière à pouvoir fournir, sur commande, de la puissance propulsive au rotor de l'hélicoptère, dans certaines phases du vol de l'hélicoptère.

L'architecture comprend en outre un dispositif de régulation 7 de la vitesse du moteur auxiliaire 8. Ce dispositif 7 de régulation reçoit une information représentative de la vitesse 7a du rotor de l'hélicoptère, une information représentative de la vitesse 7b de rotation de la turbine libre 8d du moteur auxiliaire 8 et fournit en sortie une consigne 7c de vitesse. Cette consigne de vitesse est par exemple convertie en une consigne de carburant injecté dans la chambre 86 de combustion.

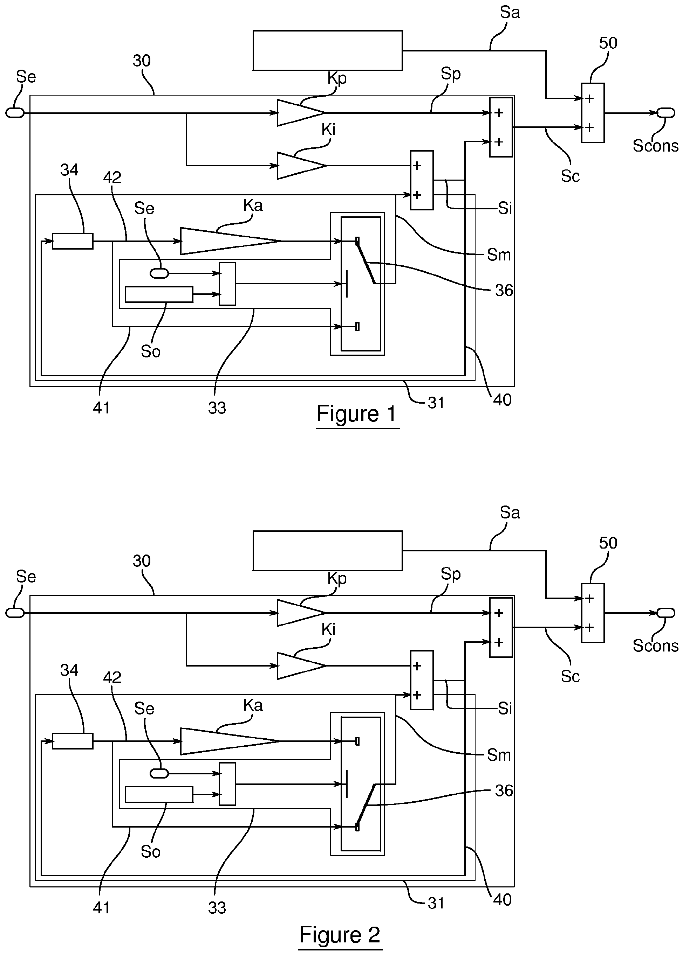

Dans la suite, le dispositif de régulation 7 va être expliqué en détail, notamment en lien avec les figures 1 et 2.

Le dispositif de régulation 7 comprend un régulateur proportionnel-intégral 30 présentant un gain proportionnel *Kp* et un gain intégral *Ki,* fonctions de la vitesse de rotation du générateur de gaz 8a du moteur auxiliaire 8.

Le régulateur 30 est configuré pour recevoir un signal *Se* représentatif d'une erreur de vitesse 7b de la turbine libre 8d du moteur auxiliaire 8. Ce signal *Se* est désigné dans tout le texte par les termes de signal d'erreur.

Le régulateur 30 est en outre configuré pour générer un signal de correction *Sc* de la vitesse d'entrainement du générateur de gaz 81 du moteur auxiliaire 8.

Pour ce faire, le régulateur 30 comprend un module proportionnel comprenant un gain proportionnel *Kp* de manière à fournir un signal proportionnel *Sp* au signal d'erreur. Le régulateur 30 comprend également un module intégral comprenant un gain intégral *Ki* et une boucle de rétroaction 31 de manière à fournir un signal intégré *Si.* Les gains *Kp* et *Ki* sont fonctions de la vitesse de rotation du générateur de gaz 81 du moteur auxiliaire 8.

La boucle 31 de rétroaction du module intégral comprend deux circuits 41, 42 et un sélecteur 33 configuré pour définir lequel des deux circuits doit être activé suivant les conditions. Les premier et deuxième circuits 41, 42 partagent en commun la partie 40 de la boucle 31 de rétroaction qui véhicule une image du signal *Si* jusqu'à chacun des deux circuits.

Le premier circuit 41 est configuré pour fournir un signal mémoire *Sm* qui est une image du signal *Si* intégré,

Le deuxième circuit 42 est configuré pour fournir un signal *Sm* mémoire proportionnel audit signal *Si* intégré suivant un gain *Ka* d'annulation, inférieur à 1, de telle manière que le signal intégré *Si* obtenu en sorti du module intégrateur s'annule progressivement lorsque l'erreur d'asservissement est faible. Ce deuxième circuit 42 forme donc un circuit de compensation.

Le sélecteur 33 est configuré pour sélectionner le premier circuit ou le deuxième circuit en fonction des résultats d'un test sur une mesure représentative de la vitesse de rotation de ladite turbine libre dudit moteur auxiliaire.

Le signal intégré *Si* est donc obtenu soit par une régulation intégrale classique soit par une régulation intégrale compensée dont la boucle de retour est corrigée d'un gain d'annulation *Ka,* ce choix s'effectuant sur la base d'un critère basé sur une mesure représentative de la vitesse de rotation de la turbine libre du moteur auxiliaire.

La boucle 31 de rétroaction comprend en outre un temporisateur 34 pour décaler dans le temps le signal intégré *Si* qui est fournit à chacun des deux circuits 41,42.

Le sélecteur 33 comprend deux entrées : une entrée reliée au circuit de compensation 42 et une entrée reliée au premier circuit 41. Le sélecteur comprend une sortie délivrant le signal mémoire *Sm* sélectionné.

Le sélecteur 33 comprend en outre un comparateur configuré pour comparer le signal d'erreur *Se* avec un seuil *So* de statisme prédéterminé.

Le sélecteur est configuré pour relier l'entrée du sélecteur reliée au premier circuit à la sortie si le comparateur indique que l'erreur de vitesse, en valeur absolue, est supérieure au seuil de statisme prédéterminé. Autrement dit, le sélecteur fournit le signal intégré *Si* comme signal mémoire *Sm* si l'erreur de vitesse, en valeur absolue, est supérieure au seuil de statisme prédéterminé.

Le sélecteur est également configuré pour relier l'entrée reliée au circuit de compensation à la sortie si le comparateur indique que l'erreur de vitesse, en valeur absolue, est inférieure au seuil de statisme prédéterminé. Autrement dit, le sélecteur fournit le signal délivré par le circuit de compensation comme signal *Sm* mémoire si l'erreur de vitesse est inférieure, en valeur absolue, audit seuil *So.* Dans ce cas, le signal intégré *Si,* en sortie d'intégrateur s'annule progressivement.

La figure 1 est une vue schématique du dispositif de régulation sur laquelle le sélecteur est basculé dans la position correspondant à la compensation mise en oeuvre par le circuit de compensation. Autrement dit, la sortie du sélecteur fournit le signal mémoire visant à annuler le signal intégré *Si.* La figure 2 est une vue schématique du dispositif de régulation sur laquelle le sélecteur est basculé dans la position de non compensation. Autrement dit, la sortie du sélecteur fournit le signal intégré. Les deux positions - de compensation et de non compensation - sont schématisées par la position de l'interrupteur 36.

Le dispositif de régulation comprend également un additionneur 50 configuré pour additionner le signal de correction *Sc* généré par le régulateur proportionnel-intégral 30 et un signal *Sa* correspondant à un point de fonctionnement cible du moteur auxiliaire dépendant des conditions de vol de l'hélicoptère, pour fournir un signal de consigne *Scons* au générateur de gaz du moteur auxiliaire.

Selon un autre mode de réalisation non représenté sur les figures, le gain d'annulation du circuit de compensation est fonction de l'erreur de vitesse de rotation de la turbine libre du moteur auxiliaire, ce qui permet de remplacer le sélecteur 33 et la condition de seuil *So.*

La figure 4 est une vue schématique d'un hélicoptère comprenant deux moteurs principaux 10, 16, et un moteur 8 auxiliaire reliés à une boite de transmission de puissance 11. Le moteur 8 auxiliaire est régulé par un dispositif de régulation selon l'invention.

La figure 5 est une vue schématique d'un procédé de régulation selon un mode de réalisation de l'invention.

Il comprend une étape 61 de réception d'un signal représentatif d'une erreur de vitesse de ladite turbine libre dudit moteur auxiliaire, dit signal d'erreur, et une étape 62 de génération d'un signal de correction de la vitesse d'entrainement du moteur auxiliaire résultant de l'addition d'un signal proportionnel audit signal d'erreur, et d'un signal, dit signal intégré, résultant de l'addition d'un signal proportionnel audit signal d'erreur suivant un gain intégral *Ki* et d'un signal, dit signal *Sm* mémoire, dépendant d'une mesure représentative de la vitesse de rotation de ladite turbine libre dudit moteur 8 auxiliaire.

Le procédé selon l'invention est avantageusement mis en oeuvre par un dispositif de régulation selon l'invention et un dispositif de régulation selon l'invention met avantageusement en oeuvre un procédé selon l'invention.

## Revendications

1. Dispositif de régulation d'un moteur (8) auxiliaire comprenant un générateur de gaz et une turbine libre adaptée pour pouvoir être reliée mécaniquement au rotor (12) d'un hélicoptère pour lui fournir une puissance propulsive en complément d'une puissance propulsive fournie par des moteurs (10) principaux, **caractérisé en ce que** ledit dispositif de régulation comprend un régulateur (30) proportionnel-intégral présentant un gain proportionnel (Kp) et un gain intégral (Ki), fonctions de la vitesse de rotation dudit générateur de gaz dudit moteur (8) auxiliaire de l'hélicoptère, ledit régulateur (30) étant configuré pour recevoir un signal représentatif d'une erreur de vitesse de ladite turbine libre dudit moteur (8) auxiliaire, dit signal (Se) d'erreur, et pour générer un signal (Sc) de correction de la vitesse d'entrainement dudit générateur de gaz dudit moteur auxiliaire, ledit signal (Sc) de correction étant obtenu par l'addition d'un signal proportionnel audit signal d'erreur suivant ledit gain proportionnel (kp), et d'un signal, dit signal (Si) intégré, résultant de l'addition d'un signal proportionnel audit signal d'erreur suivant ledit gain intégral (Ki) et d'un signal, dit signal (Sm) mémoire, fournit par une boucle (31) de rétroaction dudit signal (Si) intégré, ledit signal (Sm) mémoire étant dépendant d'une mesure représentative de la vitesse de rotation de ladite turbine libre dudit moteur (8) auxiliaire.

2. Dispositif de régulation selon la revendication 1, **caractérisé en ce que** ladite boucle (31) de rétroaction comprend :
- un premier circuit (41) configuré pour fournir un signal (Sm) mémoire qui est une image dudit signal (Si) intégré,
- un deuxième circuit (42) configuré pour fournir un signal (Sm) mémoire proportionnel audit signal (Si) intégré suivant un gain, dit gain (Ka) d'annulation, inférieur à 1,
- un sélecteur (33) configuré pour sélectionner ledit premier circuit (41) ou ledit deuxième circuit (42) en fonction des résultats d'un test sur une mesure représentative de la vitesse de rotation de ladite turbine libre dudit moteur auxiliaire.

3. Dispositif de régulation selon la revendication 2, **caractérisé en ce que** ledit test réalisé par ledit sélecteur (33) consiste à comparer ledit signal (Se) d'erreur avec un seuil (So) de statisme prédéterminé de sorte à pouvoir activer ledit premier circuit (41) si l'erreur de vitesse, en valeur absolue, est supérieure audit seuil (So) de statisme prédéterminé et à activer ledit deuxième circuit (42) si l'erreur de vitesse, en valeur absolue, est inférieure audit seuil (So), de manière à ce que ledit signal intégré s'annule progressivement.

4. Dispositif de régulation selon l'une des revendications 2 ou 3, **caractérisé en ce que** ledit gain (Ka) d'annulation dudit deuxième circuit (42) est fonction de l'erreur de vitesse de ladite turbine libre dudit moteur auxiliaire.

5. Dispositif de régulation selon l'une des revendications 1 à 4, **caractérisé en ce qu'**il comprend en outre un additionneur (50) configuré pour additionner ledit signal (Sc) de correction généré par ledit régulateur (30) proportionnel-intégral et un signal (Sa) correspondant à un point de fonctionnement cible dudit moteur auxiliaire dépendant desdites conditions de vol de l'hélicoptère, pour fournir un signal (Scons) de consigne audit générateur de gaz dudit moteur auxiliaire.

6. Architecture d'un hélicoptère multi-moteurs comprenant un groupe de puissance propulsive comprenant des moteurs (10) principaux adaptés pour être reliés à une boite (11) de transmission de puissance entrainant un rotor (12) de l'hélicoptère, et un moteur (8) auxiliaire comprenant un générateur à gaz et une turbine libre, ledit moteur auxiliaire étant adapté pour pouvoir être relié d'une part à un réseau (9) de bord de l'hélicoptère pour pouvoir alimenter au sol ledit réseau de bord en énergie électrique, et d'autre part audit groupe de puissance propulsive pour pouvoir apporter un surplus de puissance propulsive au cours d'un vol de l'hélicoptère, **caractérisée en ce que** ladite architecture comprend en outre un dispositif (7) de régulation dudit moteur (8) auxiliaire selon l'une des revendications 1 à 5, de manière à pouvoir adapter au cours d'un vol de l'hélicoptère la puissance propulsive fournie par ledit moteur (8) auxiliaire audit groupe de puissance propulsive, indépendamment de tout équilibrage entre lesdits moteurs principaux et le moteur auxiliaire.

7. Hélicoptère comprenant une architecture selon la revendication 6.

8. Procédé de régulation d'un moteur (8) auxiliaire comprenant un générateur de gaz et une turbine libre adaptée pour fournir de la puissance propulsive à un rotor d'hélicoptère, **caractérisé en ce qu'**il comprend les étapes suivantes :
- réception (61) d'un signal représentatif d'une erreur de vitesse de ladite turbine libre dudit moteur auxiliaire, dit signal d'erreur,
- génération (62) d'un signal de correction de la vitesse d'entrainement dudit générateur de gaz dudit moteur auxiliaire résultant de l'addition d'un signal proportionnel audit signal d'erreur suivant un gain proportionnel (kp), et d'un signal, dit signal (Si) intégré, résultant de l'addition d'un signal proportionnel audit signal d'erreur suivant un gain intégral (Ki) et d'un signal, dit signal (Sm) mémoire, dépendant d'une mesure représentative de la vitesse de rotation de ladite turbine libre dudit moteur (8) auxiliaire.

9. Procédé selon la revendication 8, **caractérisé en ce que** ledit signal (Sm) mémoire est un signal obtenu par une sélection entre un signal image dudit signal (Si) intégré et un signal proportionnel audit signal (Si) intégré suivant un gain, dit gain (Ka) d'annulation, inférieur à 1, la sélection dépendant des résultats d'un test sur une mesure représentative de la vitesse de rotation de ladite turbine libre dudit moteur (8) auxiliaire.

10. Procédé selon la revendication 9, **caractérisé en ce que** ledit test de sélection consiste à comparer ledit signal (Se) d'erreur avec un seuil (So) de statisme prédéterminé et à choisir ledit signal image du signal (Si) intégré si l'erreur de vitesse, en valeur absolue, est supérieure audit seuil (So) de statisme prédéterminé et à choisir ledit signal proportionnel audit signal (Si) intégré suivant ledit gain (Ka) d'annulation si l'erreur de vitesse, en valeur absolue, est inférieure audit seuil (So).

## Patentansprüche

1. Regulierungsvorrichtung eines Hilfsmotors (8), umfassend einen Gasgenerator und eine freie Turbine, die angepasst ist, um mechanisch mit dem Rotor (12) eines Helikopters verbunden zu werden, um ihm eine zusätzliche Antriebskraft zu der von den Hauptmotoren (10) gelieferten Antriebskraft zu liefern, **dadurch gekennzeichnet, dass** die Regulierungsvorrichtung einen Proportional-Integralregler (30) umfasst, der eine Proportionalverstärkung (Kp) und eine Integralverstärkung (Ki) aufweist, in Abhängigkeit von der Drehzahl des Gasgenerators des Hilfsmotors (8) des Helikopters, wobei der Regler (30) so konfiguriert ist, dass er ein Signal empfängt, das auf einen Geschwindigkeitsfehler der freien Turbine des Hilfsmotors (8) hinweist, als Fehlersignal (Se) bezeichnet, und ein Korrektursignal (Sc) zur Korrektur der Antriebsgeschwindigkeit des Gasgenerators des Hilfsmotors zu erzeugen, wobei das Korrektursignal (Sc) durch Addition eines Proportionalsignals zu dem Fehlersignal gemäß der Proportionalverstärkung (kp) und eines als Integralsignal (Si) bezeichneten Signals empfangen wird, das sich aus der Addition eines Proportionalsignals zu dem Fehlersignal gemäß der Integralverstärkung (Ki) ergibt, sowie eines als Speichersignal (Sm) bezeichneten Signals, das durch eine Rückkopplungsschleife (31) des Integralsignals (Si) geliefert wird, wobei des Speichersignal (Sm) von einer repräsentativen Messung der Drehzahl der freien Turbine des Hilfsmotors (8) abhängt.

2. Regulierungsvorrichtung nach Anspruch 1, **dadurch gekennzeichnet, dass** die Rückkopplungsschleife (31) Folgendes umfasst:
- einen ersten Kreislauf (41), der konfiguriert ist, um ein Speichersignal (Sm) zu liefern, das ein Bild des Integralsignals (Si) ist,
- einen zweiten Kreislauf (42), der konfiguriert ist, um ein Speichersignal (Sm) proportional zu dem Integralsignal (Si) gemäß einer als Annullierungsverstärkung (Ka) bezeichneten Verstärkung von weniger als 1 zu liefern,
- einen Auswahlschalter (33), der zur Auswahl des ersten Kreislaufs (41) oder des zweiten Kreislaufs (42) konfiguriert ist, in Abhängigkeit von den Ergebnissen eines Tests einer repräsentativen Messung der Drehzahl der freien Turbine des Hilfsmotors.

3. Regulierungsvorrichtung nach Anspruch 2, **dadurch gekennzeichnet, dass** der von dem Auswahlschalter (33) durchgeführte Test darin besteht, das Fehlersignal (Se) mit einer vorbestimmten Statikschwelle (So) zu vergleichen, um den ersten Kreislauf (41) aktivieren zu können, wenn der absolute Wert des Geschwindigkeitsfehlers größer ist als der Schwellenwert (So), und den zweiten Kreislauf (42) zu aktivieren, wenn der absolute Wert des Geschwindigkeitsfehlers geringer ist als der Schwellenwert (So), damit das Integralsignal sich schrittweise annulliert.

4. Regulierungsvorrichtung nach einem der Ansprüche 2 oder 3, **dadurch gekennzeichnet, dass** die Annullierungsverstärkung (Ka) des zweiten Kreislaufs (42) vom Geschwindigkeitsfehler der freien Turbine des Hilfsmotors abhängt.

5. Regulierungsvorrichtung nach einem der Ansprüche 1 bis 4, **dadurch gekennzeichnet, dass** sie weiter einen Addierer (50) umfasst, der konfiguriert ist, um das von dem Proportional-Integralregler (30) erzeugte Korrektursignal (Sc) und ein Signal (Sa), das einem gezielten Betriebspunkt des Hilfsmotors entspricht, der von den Flugbedingungen des Helikopters abhängt, zu addieren, um dem Gasgenerator des Hilfsmotors ein Befehlssignal (Scons) zu liefern.

6. Architektur eines Helikopters mit mehreren Motoren, der eine Antriebskraftgruppe umfasst, die Hauptmotoren (10) umfasst, die zum Anschluss an ein Kraftübertragungsgetriebe (11) angepasst sind, die einen Rotor (12) des Helikopters antreibt, und einen Hilfsmotor (8), der einen Gasgenerator und eine freie Turbine umfasst, wobei der Hilfsmotor einerseits zum Anschluss an ein Bordnetz (9) des Helikopters angepasst ist, um das Bordnetz am Boden mit elektrischer Energie versorgen zu können, und andererseits zum Anschluss an die Antriebskrafteinheit, um einen Überschuss an Antriebskraft bei einem Helikopterflug bereitstellen zu können, **dadurch gekennzeichnet, dass** die Architektur weiter eine Regulierungsvorrichtung (7) des Hilfsmotors (8) umfasst, nacheinem der Ansprüche 1 bis 5, um während eines Helikopterflugs die von dem Hilfsmotor (8) an die Antriebskrafteinheit gelieferte Antriebskraft anpassen zu können, unabhängig von jeglichem Ausgleich zwischen den Hauptmotoren und dem Hilfsmotor.

7. Helikopter umfassend eine Architektur nach Anspruch 6.

8. Regulierungsverfahren eines Hilfsmotors (8), umfassend einen Gasgenerator und eine freie Turbine, die dazu angepasst ist, einem Helikopterrotor Antriebskraft zu liefern, **dadurch gekennzeichnet, dass** es folgende Schritte umfasst:
- Empfangen (61) eines Signals, das einen Geschwindigkeitsfehler der Turbine des Hilfsmotors darstellt, das als Fehlersignal bezeichnet wird,
- Erzeugen (62) eines Korrektursignals der Antriebsgeschwindigkeit des Gasgenerators des Hilfsmotors, das aus der Addition eines Proportionalsignals zu dem Fehlersignal nach einer Proportionalverstärkung (kp) und eines als Integralsignal (Si) bezeichneten Signals entsteht, das aus der Addition eines Proportionalsignals zu dem Fehlersignal nach einer Integralverstärkung (Ki) und eines als Speichersignal (Sm) bezeichneten Signals entsteht, das von einer repräsentativen Messung der Drehzahl der freien Turbine des Hilfsmotors (8) abhängt.

9. Verfahren nach Anspruch 8, **dadurch gekennzeichnet, dass** das Speichersignal (Sm) ein Signal ist, das durch eine Auswahl zwischen einem Bildsignal des Integralsignals (Si) und einem Proportionalsignal des Integralsignals (Si) nach einer als Annullationsverstärkung (Ka) bezeichneten Verstärkung, kleiner als 1, empfangen wird, wobei die Auswahl von den Ergebnissen eines Tests an einer repräsentativen Messung der Drehzahl der freien Turbine des Hilfsmotors (8) abhängt.

10. Vorgang nach Anspruch 9, **dadurch gekennzeichnet, dass** der Auswahltest darin besteht, das Fehlersignal (Se) mit einer vorbestimmten Statikschwelle (So) zu vergleichen und das Bildsignal aus dem Integralsignal (Si) auszuwählen, wenn der absolute Wert des Geschwindigkeitsfehlers über der vorbestimmten Statikschwelle (So) liegt und das Proportionalsignal des Integralsignals (Si) nach der Annullationsverstärkung (Ka) auszuwählen, wenn der absolute Wert des Geschwindigkeitsfehlers unter der vorbestimmten Schwelle (So) liegt.

## Claims

1. Device for controlling an auxiliary engine (8) comprising a gas generator and a free turbine suitable for being able to be connected mechanically to the rotor (12) of a helicopter in order to supply it with thrust power in addition to thrust power supplied by the main engines (10), **characterised in that** said control device comprises a proportional-integral controller (30) having a proportional gain (Kp) and an integral gain (Ki), which are dependent on the rotation speed of said gas generator of said auxiliary engine (8) of the helicopter, said controller (30) being configured to receive a signal representing a speed error of said free turbine of said auxiliary engine (8), referred to as an error signal (Se), and to generate a signal (Sc) for correcting the drive speed of said gas generator of said auxiliary engine, said correction signal (Sc) being obtained by adding a signal proportional to said error signal in accordance with said proportional gain (Kp), and a signal, referred to as an integrated signal (Si), resulting from the addition of a signal proportional to said error signal in accordance with said integral gain (Ki) and a signal, referred to as a memory signal (Sm), supplied by a feedback loop (31) of said integrated signal (Si), said memory signal (Sm) being dependent on a measurement representing the rotation speed of said free turbine of said auxiliary engine (8).

2. Control device according to claim 1, **characterised in that** said feedback loop (31) comprises:
- a first circuit (41) configured to supply a memory signal (Sm) that is an image of said integrated signal (Si),
- a second circuit (42) configured to supply a memory signal (Sm) proportional to said integrated signal (Si) in accordance with a gain, referred to as a cancellation gain (Ka), of less than 1,
- a selector (33) configured to select said first circuit (41) or said second circuit (42) according to the results of a test on a measurement representing the rotation speed of said free turbine of said auxiliary engine.

3. Control device according to claim 2, **characterised in that** said test performed by said selector (33) consists in comparing said error signal (Se) with a predetermined droop threshold (So) so as to be able to activate said first circuit (41) if the speed error, in absolute value, is higher than said predetermined droop threshold (So) and to activate said second circuit (42) if the speed error, in absolute value, is lower than said threshold (So), such that said integrated signal is gradually cancelled.

4. Control device according to either claim 2 or claim 3, **characterised in that** said cancellation gain (Ka) of said second circuit (42) is dependent on the speed error of said free turbine of said auxiliary engine.

5. Control device according to any of claims 1 to 4, **characterised in that** it further comprises an adder (50) configured to add said correction signal (Sc) generated by said proportional-integral controller (30) and a signal (Sa) corresponding to a target operating point of said auxiliary engine that depends on said flight conditions of the helicopter, to supply a setpoint signal (Scons) to said gas generator of said auxiliary engine.

6. Architecture of a multi-engine helicopter comprising a thrust power unit comprising main engines (10) suitable for being connected to a power transmission box (11) driving a rotor (12) of the helicopter, and an auxiliary engine (8) comprising a gas generator and a free turbine, said auxiliary engine being suitable for being able to be connected firstly to an on-board system (9) of the helicopter in order to be able to supply said on-board system with electrical energy on the ground, and secondly to said thrust power unit in order to be able to supply extra thrust power during a flight of the helicopter, **characterised in that** said architecture further comprises a device (7) for controlling said auxiliary engine (8) according to any of claims 1 to 5, so as to be able to adapt, during a flight of the helicopter, the thrust power supplied by said auxiliary engine (8) to said thrust power unit, independently of any balancing between said main engines and the auxiliary engine.

7. Helicopter comprising an architecture according to claim 6.

8. Method for controlling an auxiliary engine (8) comprising a gas generator and a free turbine suitable for supplying thrust power to a helicopter rotor, **characterised in that** it comprises the following steps:
- receiving (61) a signal representing a speed error of said free turbine of said auxiliary engine, referred to as an error signal,
- generating (62) a signal for correcting the drive speed of said gas generator of said auxiliary engine resulting from the addition of a signal proportional to said error signal in accordance with a proportional gain (Kp), and a signal (Si), referred to as an integrated signal, resulting from the addition of a signal proportional to said error signal in accordance with an integral gain (Ki) and a signal, referred as a memory signal (Sm), dependent on a measurement representing the rotation speed of said free turbine of said auxiliary engine (8).

9. Method according to claim 8, **characterised in that** said memory signal (Sm) is a signal obtained by a selection between a signal that is an image of said integrated signal (Si) and a signal proportional to said integrated signal (Si) in accordance with a gain, referred to as a cancellation gain (Ka), of less than 1, the selection being dependent on the results of a test on a measurement representing the rotation speed of said free turbine of said auxiliary engine (8).

10. Method according to claim 9, **characterised in that** said selection test consists in comparing said error signal (Se) with a predetermined droop threshold (So) and choosing said signal that is an image of the integrated signal (Si) if the speed error, in absolute value, is higher than said predetermined droop threshold (So) and choosing said signal proportional to said integrated signal (Si) in accordance with said cancellation gain (Ka) if the speed error, in absolute value, is lower than said threshold (So).
